## Europäisches Patentamt
## European Patent Office
## Office européen des brevets

(19)

(11) Veröffentlichungsnummer: **0 025 187**
**B1**

(12) **EUROPÄISCHE PATENTSCHRIFT**

(45) Veröffentlichungstag der Patentschrift:
**02.03.83**

(51) Int. Cl.³: **C 03 C 9/00**, C 03 C 27/04

(21) Anmeldenummer: **80105107.9**

(22) Anmeldetag: **28.08.80**

(54) **Niedrigschmelzende, bleifreie, keramische Glasurfritten und Verfahren zu ihrer Herstellung.**

(30) Priorität: **07.09.79 US 73609**

(43) Veröffentlichungstag der Anmeldung:
**18.03.81 Patentblatt 81/11**

(45) Bekanntmachung des Hinweises auf die Patenterteilung:
**02.03.83 Patentblatt 83/9**

(84) Benannte Vertragsstaaten:
**AT BE DE FR GB IT LU NL**

(56) Entgegenhaltungen:
**DE-A-2 810 642**
**FR-A-911 591**
**FR-A-2 388 897**
**US-A-4 120 729**

(73) Patentinhaber: **Mobay Chemical Corporation, Penn Lincoln Parkway West, Pittsburgh, Pennsylvania 15205 (US)**

(72) Erfinder: **Eppler, Richard A., 2113 Folkstone, Timonium, Maryland 21093 (US)**

(74) Vertreter: **Bünemann, Gerhard, Dr. et al, c/o Bayer AG Zentralbereich, Patente Marken und Lizenzen, D-5090 Leverkusen 1, Bayerwerk (DE)**

BUNDESDRUCKEREI BERLIN

## Niedrigschmelzende, bleifreie keramische Glasurfritten
## und Verfahren zu ihrer Herstellung

Verschiedene Verwendungen von Keramik erfordern niedrigschmelzende keramische Fritten, die vorteilhaft auf Substrate aufgebracht und bei einer Temperatur von etwa 550 bis 700°C zu einem keramischen Überzug aufgeschmolzen werden können. Niedrigschmelzende und dauerhafte Glasfrittenmassen sind für Verwendungszwecke wie Aufglasur- und Schmelzdekorfarben, Verbindungen von Glas mit Metallen und Glasuren äußerst erwünscht. Niedrigschmelzende Fritten haben eine Transformations-Temperatur von weniger als 475°C, gemessen durch Dilatometrie des Wärmeausdehnungskoeffizienten. Die Lebensdauer einer Glasfritte kann gemessen werden, indem Glasfrittenpulver verschiedenen aggressiven Mitteln während einer bestimmten Testzeit bei einer bestimmten Temperatur ausgesetzt wird. Beispielsweise gilt eine Glasfrittenpulverprobe einer Teilchengröße von 74 bis 149 μm, die eine Stunde der Einwirkung von destilliertem Wasser bei 100°C ausgesetzt wird und eine Gesamtlöslichkeit der Fritte im Wasser von weniger als 0,6 Gew.-% hat, als dauerhaft.

Es ist auf dem Gebiet der Keramik bekannt, daß die beiden Eigenschaften des niedrigen Schmelzpunktes und der langen Lebensdauer im allgemeinen einander widersprechende Eigenschaften sind, so daß Frittenmaterialien, die gleichzeitig niedrigschmelzend sind und lange Lebensdauer aufweisen, schwierig zu erreichen sind. Übliche Lösungen des Problems der Aufstellung von Rezepturen für Fritten, die gleichzeitig niedrigschmelzend und haltbar sind, sind beispielsweise Bleiborsilicatsysteme, wie sie in den US-PS 3 258 350, 2 642 633 und 3 404 027 beschrieben werden, oder Blei-Zinkborsilicatsysteme, wie sie in den US-PS 3 873 330 und 3 258 350 beschrieben werden. Bleiborsilicatsystemen liegt jedoch hochgiftiges Bleioxid als Hauptbestandteil zugrunde, das vorsichtig gehandhabt werden muß, um Aufnahme durch Mund oder Atemwege zu vermeiden. Es besteht somit ein Bedürfnis für ungiftige, bleifreie Frittensysteme, die sowohl niedrigschmelzend als auch sehr dauerhaft sind. Einige Alkaliborsilicatgläser sind ausreichend niedrigschmelzend, aber nicht dauerhaft und weisen darüber hinaus eine sehr starke Ausdehnung auf. Andere Alkaliborosilicate, wie sie in Gläsern der Handelsbezeichnung Pyrex und Klimax verwendet werden, sind dauerhafte Gläser, aber hochschmelzend. Durch Mischen dieser Borosilicate werden nicht die gewünschten Eigenschaften des niedrigen Schmelzpunktes und der Dauerhaftigkeit erzielt. Alkaliphosphatgläser oder Arsen-Selen-Tellur-Antimon-Gläser sind in ausreichendem Maße niedrigschmelzend, jedoch sind ihre Haltbarkeit und Lebensdauer so schlecht, daß diese Fritten in Wasser bei mäßigen Temperaturen löslich sind. Zinkborosilicate, wie sie in der US-PS 3 113 878 beschrieben werden, können mäßige Haltbarkeit und mäßige Schmelzeigenschaften ergeben, jedoch führen diese Systeme nicht zu befriedigenden niedrigschmelzenden, dauerhaften Fritten, die besonders vorteilhaft für Anwendungszwecke sind, bei denen niedriger Schmelzpunkt und hohe Haltbarkeit gleichzeitig erforderlich sind.

Aus der DE-A1-2 810 642 sind bereits relativ niedrig schmelzende Gläser bekannt. Sie weisen jedoch noch eine Transformations-Temperatur von oberhalb 530°C auf.

Es wurde nun gefunden, daß ein bestimmter Bereich von Zusammensetzungen innerhalb des Frittensystems, das Alkali, Aluminiumoxid, Zinkoxid, Boroxid, Phosphoroxid, Siliciumoxid, Titanoxid und Fluor enthält, überraschenderweise äußerst erwünschte bleifreie keramische Glasurfritten ergibt, die geringe Wasserlöslichkeit, hohe Dauerhaftigkeit und niedrigen Schmelzpunkt aufweisen. Diese und andere Vorteile der Erfindung werden aus der folgenden ausführlichen Beschreibung deutlich.

Gegenstand der vorliegenden Erfindung sind bleifreie, niedrigschmelzende, beständige Glasfrittenzusammensetzung mit einer unter 475°C liegender Transformations-Temperatur, enthaltend

| | |
|---|---|
| 13 bis 24 Gew.-Teile | Alkalioxid, das aus 0 bis 22 Gew.-Teilen Na$_2$O, 0 bis 6 Gew.-Teilen Li$_2$O und 0 bis 22 Gew.-Teilen K$_2$O ausgewählt ist, |
| 14 bis 27 Gew.-Teile | B$_2$O$_3$, |
| 2 bis 8 Gew.-Teile | Al$_2$O$_3$, |
| 35 bis 55 Gew.-Teile | SiO$_2$, |
| 0,75 bis 4 Gew.-Teile | F, |

wenigstens zusammen 5 Gew.-Teile anderer Oxide, die aus 0 bis 6 Gew.-Teilen TiO$_2$, 0 bis 11 Gew.-Teilen ZnO und 0 bis 5 Gew.-Teilen P$_2$O$_5$ ausgewählt sind, mit der Maßgabe, daß wenigstens zwei dieser Oxide vorhanden sind, und mit der Maßgabe, daß die Summe aller Gew.-Teile ausschließlich F 100 Gew.-Teile beträgt.

Gegenstand der Erfindung sind keramische Glasurfritten, die sich für die Verwendung als Komponenten in Aufglasur- und Schmelzdekorfarben, keramischen Überzügen und zum Verbinden von Glas mit Metallen eignen. Diese Materialien werden durch Mischen von oxidbildenden Materialien wie Aluminiumoxid, üblichen keramischen Oxiden, Carbonaten, Fluoriden oder Silicofluoriden als Rohstoffe in solchen Mengen hergestellt, daß beim Schmelzen eine Glaszusammensetzung mit der nachstehend genannten Analyse nach Oxiden erhalten wird. Als Rohstoffe eignen sich beispielsweise Tonerde, wasserfreies Borax, Borsäure, Calciumcarbonat, Lithiumcarbonat, Magnesiumoxid,

2

Molybdäntrioxid, Monoammoniumphosphat, Kaliumcarbonat, wasserfreies Kaliumcarbonat, Kaliumhexafluorsilicat, Siliciumdioxid, Natriumcarbonat, Natriumhexafluorsilicat, Natriumtripolyphosphat, Titandioxid, Zinkoxid, Zirkonium und ähnliche Rohstoffe, die in den Beispielen weiter veranschaulicht sind. Das Rohstoffgemisch kann bei Temperaturen von 1000 bis 1200°C in einen Glasschmelzofen gegeben werden, wobei geschmolzenes Glas gebildet wird. Das Glas wird anschließend gefrittet, indem es entweder in Wasser oder durch ein wassergekühltes Walzenpaar gegossen wird. Falls erforderlich, kann die Fritte dann durch übliches Mahlen zu Pulver zerkleinert werden. Das Ergebnis dieser Verarbeitung ist eine homogene Glasfritte, die pro 100 Gew.-Teile ausschließlich F im wesentlichen die folgende Zusammensetzung in Gew.-Teilen hat: 0 bis 22 Teile $Na_2O$, 0 bis 6 Teile $Li_2O$, 0 bis 22 Teile $K_2O$ mit der weiteren Maßgabe, daß das Gesamtalkali 13 bis 24 Teile beträgt, 14 bis 27 Teile $B_2O_3$, 2 bis 8 Teile $Al_2O_3$, 35 bis 55 Teile $SiO_2$ und 0,75 bis 4 Teile F, 0 bis 5 Teile $P_2O_5$, 0 bis 11 Teile ZnO, 0 bis 6 Teile $TiO_2$ mit der weiteren Maßgabe, daß die Summe von $TiO_2$, ZnO und $P_2O_5$ nicht kleiner ist als 5 und wenigstens zwei von diesen drei Oxiden vorhanden sind.

Die folgenden erfindungsgemäßen Glas- oder Frittenmaterialien erfüllen diese Voraussetzungen auf Basis von 100 Gew.-Teilen:

| Komponente | Weiter Bereich, Gew.-Teile | Bevorzugter Bereich, Gew.-Teile |
|---|---|---|
| $Na_2O$ | 0 bis 22 | 13 bis 22 |
| $Li_2O$ | 0 bis 6 | 0 bis 3 |
| $K_2O$ | 0 bis 22 | 0 |

mit der Maßgabe, daß die Summe der vorstehenden Alkalien im weiten Bereich von 13 bis 24 Gew.-Teilen und im bevorzugten Bereich von 15 bis 24 Gew.-Teilen liegt;

| | | |
|---|---|---|
| $B_2O_3$ | 14 bis 27 | 18 bis 22 |
| $Al_2O_3$ | 2 bis 8 | 3 bis 8 |
| $SiO_2$ | 35 bis 55 | 40 bis 46 |
| $MoO_3$ | 0 bis 2 | 0 bis 1 |
| F | 0,75 bis 4 | 1 bis 3 |
| $P_2O_5$ | 0 bis 5 | 2 bis 3 |
| ZnO | 0 bis 11 | 7 bis 11 |
| $TiO_2$ | 0 bis 6 | 0 bis 4 |

mit der Maßgabe, daß die Summe von $TiO_2$, ZnO und $P_2O_3$ nicht kleiner ist als 5 und wenigstens zwei von diesen drei Oxiden vorhanden sind, und mit der weiteren Maßgabe, daß die Summe aller Teile ausschließlich F 100 beträgt.

Außer den vorstehend genannten Oxiden können MgO oder CaO in Mengen bis zu 2 Gew.-Teilen vorhanden sein, obwohl sie nicht erwünscht sind, es sei denn, sie sind für die Eigenschaften bei Verwendung für einen bestimmten Zweck erforderlich, da MgO und CaO die Schmelztemperatur nachteilig beeinflussen. Ebenso können bis zu 4,0 Gew.-Teile Zirkonium(IV)-oxid in der Zusammensetzung vorhanden sein, falls erforderlich, um ihre erhöhte Alkalibeständigkeit zu verleihen, obwohl die Einbeziehung von Zirkonium(IV)-oxid nicht bevorzugt wird. Bei der Zusammenstellung des rohen Versatzes, aus dem diese Fritte oder dieses Glas hergestellt wird, muß Fluor in wesentlich höheren Konzentrationen zugesetzt werden, um die Verflüchtigung zu berücksichtigen. Im weiten Bereich müssen 2,0 bis 13,0 Teile und im bevorzugten Bereich 5,0 bis 11,0 Gew.-Teile Fluor zugesetzt werden, um das verlangte Fluor in der angegebenen endgültigen Fritte zu erhalten. Außer den genannten Oxiden sollten alle übrigen zweiwertigen Ionen wie Cadmiumoxid, Strontiumoxid und Bariumoxid vermieden werden. Feuerfeste Oxide, z. B. Zinnoxid, und farbige Oxide, z. B. Chromoxid, Eisenoxid, Vanadiumpentoxid und Kupferoxid usw., sind zu vermeiden, falls nicht der Anwendungszweck ein farbiges Produkt zuläßt.

Wenn die Alkalikonzentration unter 13 Gew.-Teile gesenkt wird, kann die erforderliche niedrige Schmelztemperatur nicht erreicht werden. Wenn andererseits die Alkalikonzentration über 24 Gew.-Teile erhöht wird, wird die Löslichkeit der Fritte unannehmbar. Ebenso ist bei einer Senkung der Boroxidkonzentration unter 14 Gew.-Teile die erforderliche niedrige Schmelztemperatur nicht erreichbar, und wenn der Boroxidanteil über 27 Gew.-Teile erhöht wird, wird die Löslichkeit übermäßig hoch. Damit die erforderliche niedrige Schmelztemperatur erreicht wird, müssen von den drei Oxiden $P_2O_5$, ZnO und $TiO_2$ wenigstens zwei in meßbaren Mengen vorhanden sein. Die Gesamtkonzentration von $P_2O_5$ plus ZnO plus $TiO_2$ darf nicht geringer sein als 5 Gew.-Teile. Wenn die Konzentration von $P_2O_5$ über 5 Teile erhöht wird, wird die Löslichkeit übermäßig hoch. Wenn die Konzentration von Zinkoxid 11 Teile übersteigt, tritt entweder Trübung ein, oder die Konzentration anderer Flüsse ist so weit gesenkt worden, daß die geeignete niedrige Schmelztemperatur nicht mehr erreichbar ist. Wenn die Konzentration von Titandioxid über 6 Teile hinaus erhöht wird, tritt Trübung ein. Wenn die Konzentration von Aluminiumoxid unter 2% gesenkt wird, tritt Trübung ein. Wenn sie über 8% erhöht wird, kann die erforderliche niedrige Schmelztemperatur nicht mehr erreicht werden. Wenn die Konzentration von Siliciumdioxid unter 35% gesenkt wird, wird die Löslichkeit der Fritte zu stark, und in gewissen Fällen tritt Trübung ein. Wenn die Konzentration von Siliciumdioxid über 55% erhöht wird, ist die erforderliche niedrige Schmelztemperatur nicht mehr erreichbar. Wenn der Fluorgehalt unter 0,75% gesenkt wird, ist die erforderliche niedrige Schmelztemperatur nicht mehr erreichbar. Es ist nicht zweckmäßig, den Fluoranteil so weit zu erhöhen, daß die zurückbehaltene Menge über 4 Teile erhöht wird, ohne die Schmelztemperatur auf unerwünschte Werte zu senken.

Die hier beschriebenen Fritten haben eine Reihe von Anwendungen einschließlich Aufschmelz-Dekorfarben, Verbindungen von Glas mit Metallen und Überzugsmassen. Beispielsweise wird für die Verwendung dieser Materialien als Glasdekorfarbe ein Schlocker, der aus der Fritte, Titandioxid und einem Alkohol-Wasser-Gemisch besteht, hergestellt. Dieses Spritzmittel wird dann auf die Außenseite eines Glasgefäßes oder einer Glühlampe aufgetragen und dann 3 Minuten bei 680°C gebrannt. Das Ergebnis ist ein glatter glasiger Überzug, der dem Angriff von Schwefelwasserstoff oder Citronensäure bei Raumtemperatur widersteht. Die Materialien gemäß der Erfindung stellen wesentliche Verbesserungen gegenüber Bleiborosilicaten und Bleizinkborosilicaten sowie ähnlichen Systemen mit zugesetztem Titandioxid dar. In den bekannten Systemen ist Bleioxid ein größerer Bestandteil, der während der Herstellung mit Vorsicht so gehandhabt werden muß, daß Aufnahme durch den Mund oder durch Einatmen vermieden wird. Die Gläser oder Fritten gemäß der Erfindung sind somit nicht nur bleifrei, sondern weisen außerdem die erforderlichen niedrigen Schmelztemperaturen und Haltbarkeitseigenschaften auf.

Die Erfindung wird durch die folgenden Beispiele weiter erläutert.

Beispiel 1

Die Rohstoffe, die notwendig waren, um 15 Teile $Na_2O$, 2 Teile $Li_2O$, 7,5 Teile ZnO, 20 Teile $B_2O_3$, 2,5 Teile $P_2O_5$, 4 Teile $Al_2O_3$, 45 Teile $SiO_2$, 4 Teile $TiO_2$ und 11 Teile F (einschließlich des verflüchtigten F) zu ergeben, wurden abgewogen und in einem V-förmigen Kegelmischer mit einem Verstärkerstab gemischt. Bei diesem Versuch wurden die folgenden Rohstoffe verwendet:

| Rohstoffe | Gew.-Teile |
|---|---|
| Siliciumdioxid »Morgan 200-Mesh Supersil« (74 μm) (Pennsylvania Glass Sand Company) | 26,1 |
| Wasserfreier Borax »Pyrobor« (Kerr-McGee Chemical Corp.) | 7,6 |
| Zinkoxid »Canfelzo 216« (Pigment and Chemical Co., Ltd.) | 5,8 |
| Borsäure (U.S. Borax and Chemical Corp.) | 18,3 |
| Natriumhexafluorsilicat (Agrico Chemical Co.) | 28,9 |
| Technisches Lithiumcarbonat (Foote Mineral Company) | 3,8 |
| Titandioxid »Titanox 3030« (NL Industries) | 3,1 |
| Aluminiumoxid A-1 (Aluminium Company of America) | 3,1 |
| Technisches Monoammoniumphosphat (Tilley Chemical Co.) | 3,2 |

4

Nach dem Mischen wurden die Rohstoffe 30 Minuten bei 1125°C geschmolzen. Die erhaltene Glasfritte wurde in Wasser gegossen und dann getrocknet. Die getrocknete Fritte wurde in eine Kugelmühle gegeben und zu Pulver gemahlen, das auf einem 74-$\mu$m-Sieb einen Rückstand von 5% hatte (Siebdurchgang 95%). Die erhaltene Fritte hatte die folgende Zusammensetzung: 15 Teile $Na_2O$, 2 Teile $Li_2O$, 7,5 Teile ZnO, 20 Teile $B_2O_3$, 2,5 Teile $P_2O_5$, 4 Teile $Al_2O_3$, 45 Teile $SiO_2$, 4 Teile $TiO_2$ und 2,8 Teile F. Die Fritte hatte einen mit dem Dilatometer gemessenen Transformationspunkt bei 455°C und eine Löslichkeit in Wasser von 0,15%, gemessen durch Einwirkung von Wasser bei 100°C für 1 Stunde. Der Wärmeausdehnungskoeffizient betrug 11,2 cm/cm °C. Die Dünnflüssigkeit dieser Fritte ergibt sich auch aus dem sog. Ringröhrentest (ausführlich beschrieben in Amer. Cer. Soc. Bull. 53 [1974] 443–445), bei dem ringröhrenförmige Prüfkörper aus gepreßtem Pulver im Ofen erhitzt werden, bis wesentliche Erweichung stattfindet. Der Durchmesser des Innenlochs der Ringröhre wird dann gemessen. Für Vergleichszwecke werden die Ergebnisse dann auf einen gemeinsamen Standard berichtigt. Das Ergebnis für diese Fritte ist 1,00. Im Vergleich hierzu haben Materialien, die für die Zwecke, für die sie verwendet werden sollen, gerade noch geeignet sind, einen Ringröhrenwert von 3,25.

## Beispiel 2

92 Teile der gemäß Beispiel 1 hergestellten Fritte wurden mit 8 Teilen Anatas, 24 Teilen Wasser, 8 Teilen denaturiertem Äthylalkohol, 0,187 Teilen Natriumnitrit, 0,061 Teilen Netzmittel »Triton X-100«, 0,062 Teilen Octylalkohol und 2 Teilen Butylcarbit gemischt. Dieses Gemisch wurde auf die Außenfläche einer Glühlampe gespritzt und 3 Minuten bei 670°C gebrannt. Das Ergebnis war ein weißer Überzug auf der Glühlampe, der 15 Minuten der Einwirkung von Schwefelwasserstoff oder Citronensäure ohne nachteilige Veränderung des Überzugs widerstand.

## Beispiele 3 bis 15

Die für die Versätze erforderlichen Rohstoffe, die in Tabelle I in Gew.-Teilen genannt sind, wurden getrennt abgewogen und in einem V-förmigen Kegelmischer mit Verstärkungsstab gemischt. Die zugesetzte Fluormenge einschließlich des abgedampften Fluors ist in Tabelle II unter »F im Versatz« angegeben. Diese Fritten wurden dann 30 Minuten bei 1125°C geschmolzen. Die erhaltenen Glasfritten wurden in Wasser gegossen und dann getrocknet. Die getrocknete Fritte wurde in eine Kugelmühle gegeben und zu Pulver gemahlen, das auf einem 74-$\mu$m-Sieb einen Rückstand von 5% hatte. Die erhaltenen Fritten hatten die in Tabelle II genannten Zusammensetzungen mit dem in der Zeile »F in der Fritte« angegebenen Fluorgehalt. Die Eigenschaften dieser Fritten sind ebenfalls in Tabelle II genannt. Bei den genannten Zusammensetzungen lag der Ringröhrentestwert erheblich unter 3,25. Der Transformationspunkt lag unter 475°C und die Löslichkeit unter 0,6%.

Tabelle I

| Rohstoff | Beispiele | | | | | | | | | | | | |
|---|---|---|---|---|---|---|---|---|---|---|---|---|---|
| | 3 | 4 | 5 | 6 | 7 | 8 | 9 | 10 | 11 | 12 | 13 | 14 | 15 |
| Siliciumdioxid, 74 μm (Morgan 200-Mesh Supersil) | 27,1 | 26,4 | 24,8 | 19,7 | 37,8 | 26,1 | 30,2 | 32,5 | 18,6 | 19,6 | 23,4 | 28,2 | 26,2 |
| Wasserfreier Borax (Pyrobor) | 8,3 | 17,9 | 19,1 | 15,6 | 26,8 | 7,6 | 7,8 | 20,7 | — | 16,0 | 7,7 | 24,4 | 7,6 |
| Helle Sodaasche | — | — | 1,1 | — | — | — | — | — | — | — | — | — | — |
| Zinkoxid (Canfelzo 216) | 6,1 | 2,6 | 8,9 | 7,1 | 7,0 | 4,3 | 6,0 | 6,5 | 7,8 | 8,2 | 8,0 | — | 7,8 |
| Borsäure | 18,5 | 7,0 | — | 14,9 | — | 18,3 | 12,6 | 5,3 | 22,2 | 8,1 | 11,6 | — | 11,5 |
| Schlämmkreide Nr. 4 | — | — | — | — | — | — | — | — | — | — | — | — | 2,9 |
| Natriumhexafluorsilicat | 30,0 | 30,2 | 31,4 | 29,1 | 12,5 | 28,9 | 29,8 | 20,4 | — | 29,0 | 29,4 | 31,2 | 29,0 |
| Techn. Lithiumcarbonat | — | 5,0 | 5,8 | 4,7 | 4,6 | 3,8 | 4,0 | 4,3 | 5,2 | 10,8 | 3,9 | 6,0 | 3,9 |
| Titandioxid »Titanox 3030« | — | 3,3 | 3,0 | 2,5 | 3,7 | 3,1 | 3,5 | 3,4 | 2,4 | 2,5 | 4,8 | 3,4 | 3,1 |
| Calciniertes Kaliumcarbonat | — | — | — | — | — | — | — | — | 3,3 | — | — | — | — |
| Aluminiumoxid A-1 | 6,5 | 3,3 | 3,0 | 2,5 | 3,7 | 3,1 | 3,5 | 3,4 | 2,4 | 2,5 | 4,8 | 3,4 | 1,6 |
| Molybdän(VI)-oxid (technisch, gesiebt) | — | 0,9 | — | — | — | — | — | — | — | — | — | — | — |
| Kaliumhexafluorsilicat | — | — | — | — | — | — | — | — | 32,6 | — | — | — | — |
| Techn. Monoammoniumphosphat | — | 3,3 | — | 4,0 | 0,2 | 3,2 | 2,5 | 3,5 | 3,0 | 3,2 | 6,4 | 2,1 | 6,4 |
| Natriumtripolyphosphat von Lebensmittelreinheit | 3,5 | — | 2,8 | — | 3,8 | — | — | — | — | — | — | 1,4 | — |
| Magnesiumoxid, Typ 569 | — | — | — | — | — | 1,6 | — | — | — | — | — | — | — |
| Wasserfreie Borsäure | — | — | — | — | — | — | — | — | 2,5 | — | — | — | — |

Tabelle II

| | Beispiel Nr. | | | | | | | | | | | | |
|---|---|---|---|---|---|---|---|---|---|---|---|---|---|
| | 3 | 4 | 5 | 6 | 7 | 8 | 9 | 10 | 11 | 12 | 13 | 14 | 15 |
| Na$_2$O (Gew.-Teile) | 17,0 | 18,7 | 21,1 | 18,1 | 15,0 | 15,0 | 15,0 | 15,0 | — | 18,3 | 15,0 | 21,6 | 15,0 |
| Li$_2$O | — | 2,5 | 2,8 | 2,4 | 2,0 | 2,0 | 2,0 | 2,0 | 2,8 | 5,6 | 2,0 | 2,9 | 2,0 |
| K$_2$O | — | — | — | — | — | — | — | — | 21,1 | — | — | — | — |
| B$_2$O$_3$ | 20,0 | 20,0 | 15,6 | 24,4 | 20,0 | 20,0 | 15,6 | 20,0 | 20,0 | 20,0 | 15,0 | 20,0 | 15,0 |
| P$_2$O$_5$ | 2,5 | 2,5 | 1,9 | 3,1 | 2,5 | 2,5 | 1,9 | 2,5 | 2,5 | 2,5 | 5,0 | 2,5 | 5,0 |
| ZnO | 7,5 | 3,3 | 10,5 | 9,0 | 7,5 | 5,5 | 7,5 | 7,5 | 10,5 | 10,5 | 10,0 | — | 10,0 |
| TiO$_2$ | — | 4,0 | 3,6 | 3,2 | 4,0 | 4,0 | 4,4 | 4,0 | 3,2 | 3,2 | 6,0 | 4,0 | 4,0 |
| Al$_2$O$_3$ | 8,0 | 4,0 | 3,6 | 3,2 | 4,0 | 4,0 | 4,4 | 4,0 | 3,2 | 3,2 | 6,0 | 4,0 | 2,0 |
| SiO$_2$ | 45,0 | 44,0 | 40,8 | 36,6 | 45,0 | 45,0 | 49,2 | 45,0 | 36,6 | 36,6 | 41,0 | 45,0 | 45,0 |
| MoO$_3$ | — | 1,0 | — | — | — | — | — | — | — | — | — | — | — |
| F (im Versatz) | 11,0 | 11,0 | 11,0 | 11,0 | 4,0 | 11,0 | 11,0 | 7,0 | 11,0 | 11,0 | 11,0 | 11,0 | 11,0 |
| (in der Fritte) | 2,8 | 2,8 | 2,8 | 2,8 | 1,3 | 2,8 | 2,8 | 2,6 | 2,8 | 2,8 | 2,8 | 2,8 | 2,8 |
| CaO | — | — | — | — | — | — | — | — | — | — | — | — | 2,0 |
| MgO | — | — | — | — | — | 2,0 | — | — | — | — | — | — | — |
| **Gefundene Eigenschaften** | | | | | | | | | | | | | |
| Ringröhrentest | 3,09 | 0,75 | 0,46 | 0,71 | 1,62 | 1,85 | 1,77 | 0,91 | 1,48 | 0,60 | 1,98 | 1,94 | 1,67 |
| Transformationspunkt, °C | 470 | 430 | 420 | 455 | 470 | 465 | 460 | 460 | — | — | — | — | — |
| Löslichkeit, % | 0,22 | 0,35 | 0,40 | 0,27 | 0,15 | 0,13 | 0,21 | 0,15 | — | — | — | — | — |
| Ausdehnungskoeffizient (× 10$^{-6}$ cm/cm °C) | 9,8 | 13,9 | 13,3 | 10,8 | 9,9 | 11,1 | 11,6 | 11,0 | — | — | — | — | — |

## 0 025 187

### Beispiele 16 bis 22

Im Gegensatz hierzu sind in Tabelle III einige Beispiele von Materialien genannt, die den in Tabelle II genannten im allgemeinen ähnlich sind, die jedoch bei einer oder mehreren bestimmten Komponenten der Fritte von den erfindungsgemäß vorgeschriebenen Zusammensetzungen abweichen. Obwohl sie in der gleichen Weise, wie vorstehend beschrieben, hergestellt wurden, zeigen die in Tabelle III genannten Ergebnisse, daß diese Zusammensetzungen nicht die erforderliche Kombination von niedriger Schmelztemperatur plus geringer Löslichkeit aufweisen.

Die vorstehenden erfindungsgemäßen Beispiele veranschaulichen die Vorteile der Erfindung für die speziellen Frittenzusammensetzungen, die die Kombination von niedriger Schmelztemperatur und hoher Haltbarkeit und Lebensdauer aufweisen.

### Tabelle III

| | Beispiel Nr. | | | | | | |
| | 16 | 17 | 18 | 19 | 20 | 21 | 22 |
|---|---|---|---|---|---|---|---|
| **Gewichtsteile** | | | | | | | |
| $Na_2O$ | 13,5 | 16,3 | 17,0 | 17,0 | 20,5 | 15,0 | 24,2 |
| $Li_2O$ | — | — | — | — | — | 2,0 | 3,2 |
| $K_2O$ | — | — | — | — | — | — | — |
| $B_2O_3$ | 25,5 | 23,7 | 20,5 | 20,0 | 18,5 | 33,3 | 20,0 |
| $P_2O_5$ | — | — | — | 2,5 | 2,5 | 4,2 | 2,5 |
| $ZnO$ | 11,0 | 13,2 | 7,5 | 7,5 | 9,0 | 7,5 | 12,1 |
| $TiO_2$ | — | — | — | — | — | 2,9 | 2,9 |
| $Al_2O_3$ | — | — | 8,0 | — | 3,7 | 2,9 | 2,9 |
| $SiO_2$ | 50,0 | 46,8 | 47,0 | 53,0 | 45,8 | 32,2 | 32,2 |
| $MoO_3$ | — | — | — | — | — | — | — |
| F (im Versatz) | — | — | 11,0 | 11,0 | — | 11,0 | 11,0 |
| (in der Fritte) | — | — | 2,8 | 2,8 | — | 2,8 | 2,8 |
| **Gefundene Eigenschaften** | | | | | | | |
| Ringröhrentest | 9,3 | 5,8 | 6,7 | 7,6 | 8,6 | 0,37 | 0,11 |
| Transformationspunkt | — | — | — | — | — | 450°C | 400°C |
| Löslichkeit, % | — | — | — | — | — | 1,99 | 1,63 |
| Ausdehnungskoeffizient ($\times 10^{-6}$ cm/cm °C) | — | — | — | — | — | 11,0 | 15,1 |

### Patentansprüche

1. Bleifreie, niedrigschmelzende, beständige Glasfrittenzusammensetzung mit einer unter 475°C liegender Transformations-Temperatur, enthaltend

13 bis 24 Gew.-Teile Alkalioxid, das aus 0 bis 22 Gew.-Teilen $Na_2O$, 0 bis 6 Gew.-Teilen $Li_2O$ und 0 bis 22 Gew.-Teilen $K_2O$ ausgewählt ist,

8

14 bis 27 Gew.-Teile B$_2$O$_3$,
2 bis 8 Gew.-Teile Al$_2$O$_3$,
35 bis 55 Gew.-Teile SiO$_2$,
0,75 bis 4 Gew.-Teile F,
wenigstens zusammen 5 Gew.-Teile anderer Oxide, die aus 0 bis 6 Gew.-Teilen TiO$_2$, 0 bis 11 Gew.-Teilen ZnO und 0 bis 5 Gew.-Teilen P$_2$O$_5$ ausgewählt sind, mit der Maßgabe, daß wenigstens zwei dieser Oxide vorhanden sind, und mit der Maßgabe, daß die Summe aller Gew.-Teile ausschließlich F 100 Gew.-Teile beträgt.

2. Bleifreie Glasfrittenzusammensetzung nach Anspruch 1, dadurch gekennzeichnet, daß sie

13 bis 22 Gew.-Teile Na$_2$O,
0 bis 3 Gew.-Teile Li$_2$O,
0 bis 1 Gew.-Teil K$_2$O,
18 bis 22 Gew.-Teile B$_2$O$_3$,
3 bis 8 Gew.-Teile Al$_2$O$_3$,
40 bis 46 Gew.-Teile SiO$_2$,
1 bis 3 Gew.-Teile F,
0 bis 4 Gew.-Teile TiO$_2$,
7 bis 11 Gew.-Teile ZnO und
2 bis 3 Gew.-Teile P$_2$O$_5$ enthält.

3. Bleifreie Glasfrittenzusammensetzung nach Anspruch 1, dadurch gekennzeichnet, daß sie 0 bis 2 Gew.-Teile MgO enthält.

4. Bleifreie Glasfrittenzusammensetzung nach Anspruch 1, dadurch gekennzeichnet, daß sie 0 bis 2 Gew.-Teile CaO enthält.

5. Bleifreie Glasfrittenzusammensetzung nach Anspruch 1, dadurch gekennzeichnet, daß sie 0 bis 4 Gew.-Teile Zirkonium enthält.

6. Bleifreie Glasfrittenzusammensetzung nach Anspruch 1, dadurch gekennzeichnet, daß sie 0 bis 1 Gew.-Teil MoO$_3$ enthält.

7. Verfahren zur Herstellung einer beständigen Glasfrittenzusammensetzung durch Schmelzen von oxidbildenden Versatzmaterialien bei Temperaturen über 1000°C zur Bildung einer Glasfritte, dadurch gekennzeichnet, daß man die Versatzmaterialien in solchen Mengenanteilen zusammengibt, daß die daraus gebildete Glasfritte die folgende Oxidanalyse auf Basis von insgesamt 100 Gew.-Teilen aufweist:

13 bis 24 Teile Alkalioxide, die aus 0 bis 22 Teilen Na$_2$O plus 0 bis 6 Teilen Li$_2$O plus 0 bis 22 Teilen K$_2$O ausgewählt sind,
14 bis 27 Teile B$_2$O$_3$,
2 bis 8 Teile Al$_2$O$_3$,
35 bis 55 Teile SiO$_2$,
wenigstens zusammen 5 Teile anderer Oxide, die aus 0 bis 6 Teilen TiO$_2$ plus 0 bis 11 Teilen ZnO plus 0 bis 5 Teilen P$_2$O$_j$ ausgewählt sind mit der Maßgabe, daß wenigstens zwei dieser anderen Oxide vorhanden sind, und
wobei in den Versatzmaterialien Fluoride, die etwa 2 bis 13 Teile Fluor enthalten, vorhanden sind, ein Teil dieses Fluors flüchtig wird, so daß 0,75 bis 4 Teile Fluor (F) in der Glasfritte zurückbleiben, wodurch die Glasfrittenzusammensetzung bleifrei ist und eine Transformations-Temperatur von weniger als 475°C hat.

**Claims**

1. Lead-free, low melting and durable glass frit composition having a transformation point below 475°C, containing

13 to 24 parts by weight of alkali metal oxide, which is selected from 0 to 22 parts by weight of Na$_2$O, 0 to 6 parts by weight of Li$_2$O and 0 to 22 parts by weight of K$_2$O,
14 to 27 parts by weight of B$_2$O$_3$,
2 to 8 parts by weight of Al$_2$O$_3$,
35 to 55 parts by weight of SiO$_2$,
0.75 to 4 parts by weight of F, and
at least altogether 5 parts by weight of other oxides which are selected from 0 to 6 parts by weight of TiO$_2$, 0 to 11 parts by weight of ZnO and 0 to 5 parts by weight of P$_2$O$_5$, with the proviso that at least two of these oxides are present, and with the proviso that the sum of all parts by weight excluding F amounts to 100 parts by weight.

2. Lead-free glass frit composition according to Claim 1, characterised in that it contains

| | |
|---|---|
| 13 to 22 | parts by weight of $Na_2O$, |
| 0 to 3 | parts by weight of $Li_2O$, |
| 0 to 1 | part by weight of $K_2O$, |
| 18 to 22 | parts by weight of $B_2O_3$, |
| 3 to 8 | parts by weight of $Al_2O_3$, |
| 40 to 46 | parts by weight of $SiO_2$, |
| 1 to 3 | parts by weight of F, |
| 0 to 4 | parts by weight of $TiO^2$, |
| 7 to 11 | parts of weight of ZnO and |
| 2 to 3 | parts by weight of $P_2O_5$. |

3. Lead-free glass frit composition according to Claim 1, characterised in that it contains 0 to 2 parts by weight of MgO.

4. Lead-free glass frit composition according to Claim 1, characterised in that it contains 0 to 2 parts by weight of CaO.

5. Lead-free glass frit composition according to Claim 1, characterised in that it contains 0 to 4 parts by weight of zirconium.

6. Lead-free glass frit composition according to Claim 1, characterised in that it contains 0 to 1 part by weight of $MoO_3$.

7. Process for the production of a durable glass frit composition by melting oxide producing batch materials at temperatures above 1000°C to produce a glass frit, characterised in that the batch materials are mixed in such proportions that the glass frit produced therefrom has the following oxide analysis based on a total of 100 parts by weight:

| | |
|---|---|
| 13 to 24 | parts of alkali metal oxides, which are selected from 0 to 22 parts of $Na_2O$ plus 0 to 6 parts of $Li_2O$ plus 0 to 22 parts of $K_2O$, |
| 14 to 27 | parts of $B_2O_3$, |
| 2 to 8 | parts of $Al_2O_3$, |
| 35 to 55 | parts of $SiO_2$, and |

least altogether 5 parts of other oxides, which are selected from 0 to 6 parts of $TiO^2$ plus 0 to 11 parts of ZnO plus 0 to 5 parts of $P_2O_5$, with the proviso that at least two of these other oxides are present, and

wherein fluorides which contain about 2 to 13 parts of fluorine are present in the batch materials, and a part of this fluorine becomes volatile so that 0.75 to 4 parts of fluorine (F) remain in the glass frit, whereby the glas frit composition is lead-free and has a transformation point of less than 475°C.

**Revendications**

1. Composition de fritte de verre durable, à bas point de fusion et exempte de plomb, ayant une température de transformation située au-dessous de 475°C, contenant:

| | |
|---|---|
| 13 à 24 | parties en poids d'oxyde alcalin, choisi parmi 0 à 22 parties en poids de $Na_2O$, 0 à 6 parties en poids de $Li_2O$ et 0 à 22 parties en poids de $K_2O$, |
| 14 à 27 | parties en poids de $B_2O_3$, |
| 2 à 8 | parties en poids de $Al_2O_3$, |
| 35 à 55 | parties en poids de $SiO_2$, |
| 0,75 à 4 | parties an poids de F, |

au moins ensemble 5 parties en poids d'autres oxydes choisis parmi 0 à 6 parties en poids de $TiO_2$, 0 à 11 parties en poids de ZnO et 0 à 5 parties en poids de $P_2O_5$, avec la mesure qu'au moins deux de ces oxydes soient présents et avec la mesure que la somme de toutes les parties en poids, à l'exclusion de F, s'élève à 100 Parties en poids.

2. Composition de fritte de verre exempte de plomb selon la revendication 1, caractérisée en ce qu'elle contient

| | |
|---|---|
| 13 à 22 | parties en poids de $Na_2O$, |
| 0 à 3 | parties en poids de $Li_2O$, |
| 0 à 1 | partie en poids de $K_2O$, |
| 18 à 22 | parties en poids de $B_2O_3$, |
| 3 à 8 | parties en poids de $Al_2O_3$, |
| 40 à 46 | parties en poids de $SiO_2$, |

0 025 187

1 à 3   parties en poids de F,
0 à 4   parties en poids de $TiO_2$,
7 à 11  parties en poids de ZnO et
2 à 3   parties en poids de $P_2O_5$.

3. Composition de fritte de verre exempte de plomb selon la revendication 1, caractérisée en ce qu'elle contient 0 à 2 parties en poids de MgO.

4. Composition de fritte de verre exempte de plomb selon la revendication 1, caractérisée en ce qu'elle contient 0 à 2 parties en poids de CaO.

5. Composition de fritte de verre exempte de plomb selon la revendication 1, caractérisée en ce qu'elle contient 0 à 4 parties en poids de zirconium.

6. Composition de fritte de verre exempte de plomb selon la revendication 1, caractérisée en ce qu'elle contient 0 à 1 partie en poids de $MoO_3$.

7. Procédé de préparation d'une composition de fritte de verre durable par fusion de matières de mélange formatrices d'oxyde à des températures supérieures à 1000°C pour la formation d'une fritte de verre, caractérisé en ce qu'on ajoute ensemble les matières de mélange en des proportions telles que fritte de verre formée à partir de celles-ci présente l'analyse d'oxyde suivante sur la base de 100 parties en poids en tout:

13 à 24  parties en poids d'oxydes alcalins choisis à partir de 0 à 22 parties de $Na_2O$ plus 0 à 6 parties de $Li_2O$ plus 0 à 22 parties de $K_2O$,
14 à 27  parties de $B_2O_3$,
2 à 8    parties de $Al_2O_3$,
35 à 55  parties de $SiO_2$,
au moins ensemble 5 parties d'autres oxydes choisis à partir de 0 à 6 parties de $TiO_2$ plus 0 à 11 parties de ZnO plus 0 à 5 parties de $P_2O_5$, avec la mesure qu'au moins deux de ces autres oxydes soient présents, et
en ce que dans les matières du mélange des fluorures qui contiennent environ 2 à 13 parties de fluor sont présents et en ce qu'une partie de ce fluor est volatile, en sorte qu'il reste 0,75 à 4 parties de fluor (F) dans la fritte de verre, la composition de fritte de verre étant ainsi exempte de plomb et ayant une température de transformation inférieure à 475°C.

11